# EUROPEAN PATENT SPECIFICATION

(11) **EP 0 502 671 B1**
(45) Date of publication and mention of the grant of the patent: **17.04.1996**
(21) Application number: 92301749.5
(22) Date of filing: 28.02.1992
(51) Int. Cl.: F16P 1/02, B30B 9/32

(54) **Safety apparatus**
Sicherheitsvorrichtung
Dispositif de sécurité

(30) Priority: 02.03.1991 GB 9104434
(43) Date of publication of application: 09.09.1992
(73) Proprietor: J. McIntyre (Machinery) Limited, Dunkirk Nottingham NG7 2SD (GB)
(72) Inventor: Bramley, Alan Geoffrey, Dunkirk, Nottingham, NG7 2SD (GB)
(74) Representative: Goodman, Christopher

(56) References cited:
- US-A- 2 664 332
- US-A- 4 041 765
- US-A- 4 337 694
- WELDING JOURNAL vol. 70, no. 9, September 1991, MIAMI US pages 71 - 74 , XP000240050 V.L. MANGOLD,JR. 'Safety and robotic welding: mutual compatibility'

## Description

The present invention relates to safety apparatus and more particularly to safety apparatus for use with machinery which may be operated by more than one operator.

Known safety apparatus for machinery comprises safety buttons which when operated cause the machinery to stop. These buttons may be in the form of operating bars which when pressed against will stop the machines.

A disadvantage with such buttons or similar stop devices is that when a machine is operated by more than one operator an accident can occur when a first operator is trapped by the moving machinery and so is unable to operate the safety cut out and when the machinery is noisy so that a second operator does not hear any cry for assistance.

The above problem can be overcome by providing a guard or shield, possibly of wire mesh which descends on commencement of an operation thus preventing any access to the machine by any person during an operation.

Disadvantages with such guards is that they restrict access to the machine, slowing down operations, Also with machinery such as for example metal baling machines where the material being handled is difficult to manoeuvre the guards may be easily damaged by the metal to be baled.

The article Safety and Robotic Welding: Mutual Compatibility, Welding Journal by VL Mangold, Jr., Vol 70, No.9. Sept. 1991, Miami US, p.71-74 discloses the provision of a work area of such dimensions that a potentially dangerous machine or robot operates outside the reach of an operator.

US Patent No 4,041,765 discloses a safety guard for a press comprising an adjustable horizontal bar disposed between the machine and the workpiece and positioned such that the operator is prevented from inserting his hands into the pressing are.

It is an object of the present invention to provide a safety guard apparatus suitable for a metal baling machine.

According to the present invention there is provided safety apparatus as claimed in claim 1.

Preferred embodiments of the invention are claimed in the dependent claims 2 to 9.

Embodiments of the present invention will now be described, by way of example with reference to the accompanying drawings in which:-
Figure 1 shows in plan view a metal baling machine equipped with safety barrier apparatus according to the present invention; and
Figure 2 shows the metal baling machine of Figure 1 in side elevation.

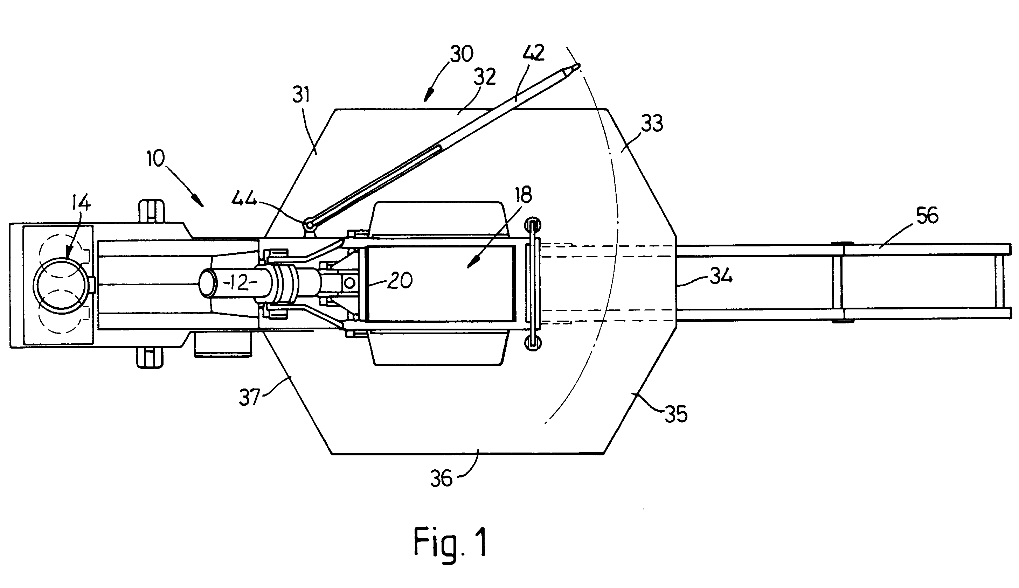

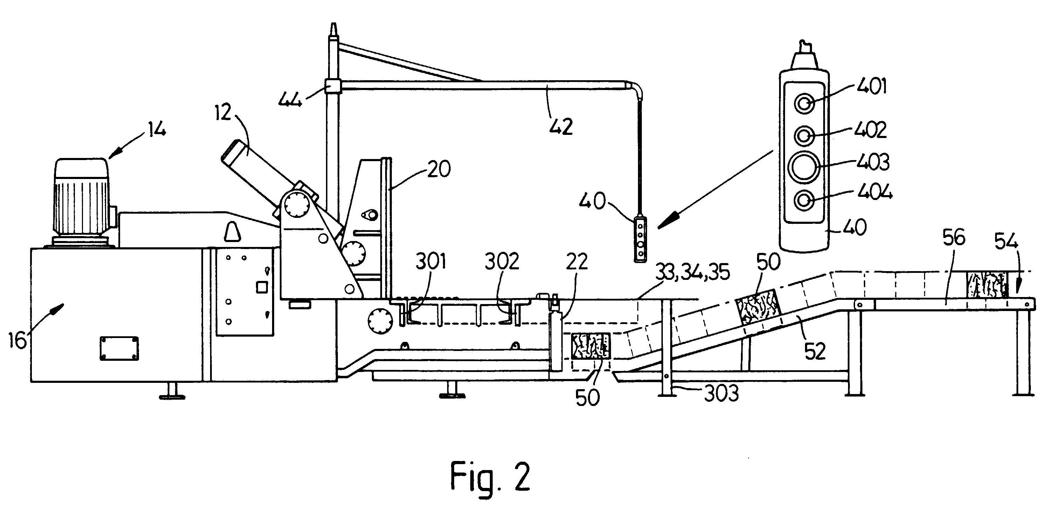

With reference now to Figures 1 and 2 the metal baling machine 10 comprises in known manner hydraulic actuating cylinder means 12 driven by an electric motor 14 hydraulic fluid being contained in cooling reservoir tank 16.

The metal baling machinery comprises a baling box 18 a hydraulically driven lid 20 driven by a ram 12 and in known manner a further ram (not shown) compresses material within box 18 once lid 20 has closed down onto the box. A hydraulically operated release gate 22, in known manner, is operable to allow ejection of the compressed bale 50. These parts 20 and 18 form the crushing mechanisms of the baler

The safety barrier according to the present invention comprises a platform or table 30 comprising seven areas 31 to 37 which respectively guard various areas around the metal baling box 18.

The platform or table 30 is in the embodiment shown supported by angle iron support arms 301, 302 and by a leg 303 on each side of the baling box 18. Only one side is shown in Figure 2. Other suitable support means may be used. The support arms 301, 302 may be suitably attached to the baling box 18 by bolts or more permanently by welding. The attachment means must however be such that an operator cannot remove the barrier/table 30 without substantial and deliberate effort.

The barrier 30 is thereby rendered tamper proof and unlike other guards it cannot be removed by an operator. The operator cannot, as in the case of a movable guard allow the machine to be operated by, for example, illegally isolating a switch to indicate that a guard is in position when it is in fact not. This is of particular importance in an industry such as scrap metal recovery in which speed of operation is of importance from a financial viewpoint and therefore the temptation to circumvent guard systems is great. Also in such an environment as a scrap metal yard the supervision of operatives is not easily achieved and the noise volume in such a yard would prevent a warning from being heard. The combined safety barrier and table features thus provide a completely tamper proof guard and also a valuable sorting and support surface for metal to be baled.

The baling machine 10 is preferably operated using a control box 40 suspended from an overhead gantry 42 which is pivotable as shown on an axis 44. The control box may have a plurality of controls but in this example has four, lid up 401, lid down 402, emergency stop 403 and auto baling sequence start 404, this latter sequence being particularly dangerous.

An operator is therefore able to operate the machine from either side of the box 18.

The areas 33, 34 and 35 prevent access to the front of the baler preventing any access to the hydraulically operated door 22.

The hydraulic ram (not shown which pushes each bale out of the baling box 18 may be used to push the bales up ramp 52. Thus though the bales emerge from under safety barrier 34 they are movable onto a high level 54 at the top of ramp 56 to be loaded onto for example a trailer (not shown).

Preferably the barrier 30 is set at a height suitable as a working table, the upper surface of barrier 30 being usable therefore as a sorting table. The height of the barrier is selected such that an operator can lean over the table but cannot fall into the machinery from a normal standing position. The table top of the barrier and the top of the machine preferably provide a relatively flat surface to enable material to be slid across the upper surface of the barrier and into the baling box 18. Small items may be placed on the upper surface of the table and then pushed into the baling box 18 by means of a suitable pushing implement, e.g. a short pole. The items can be extremely heavy since they will only require to be slid over the surface. Additionally large or awkwardly shaped items may be positioned on the upper surface of the table and then severed by the action of the lid 20 closing to cut them up into smaller more manageable pieces.

The width of each of the sections 31 to 37 is preferably greater than 0.70 metres when measured from the nearest part of box 18 in a radial direction. Thus even if an operator stretches inwards it will be difficult if not impossible to insert an arm into the path of the lid 20 as it closes. In a particular embodiment the width of the sections is greater than 0.80 metres.

The barrier 30 may be made from sheet steel (plate) of suitable thickness (e.g. 3 mm to 12.5 mm) to withstand all treatment from the type of material being handled and accidental damage by for example fork lift trucks etc.

The barrier 30 cannot be easily bent or twisted and since it is permanently positioned it is not possible, as in the case of moving guards, to remove the barrier to allow easier access to the machine

The barrier therefore provides an effective means to prevent accidents whilst not unduly preventing access to the machine and also providing a sorting table. The dimensions of the table are important and even with a small machine the barrier will normally be greater than 0.70 metres to provide the necessary safety distance.

The height of the table will vary with the height of the machine since it is preferable to have the height of the table equal to the height of the top of the baling box 18.

The height may for example vary between 0.60 metres to 1.0 metres for an average machine. If a machine with a higher top surface to the baling box is envisaged, say for example 1.2 meters, then the barrier width may be reducible to for example 0.6 metres. The height of the top of the baling box 18 is selected to enable an operator to be able to readily load scrap to be sorted onto the table and since the operator has to lift scrap onto the table a reasonably low working height is preferred.

## Claims

1. Safety apparatus in a metal baling machine, the safety apparatus comprising a rigid table (30) the table being of dimension to completely surround crushing mechanisms (20,18) of the metal baling machine and being of such a height that an operator is prevented from falling into the machinery and characterised in that the rigid table (30) is a combined tamper-proof safety barrier and sorting and support surface and the table is permanently fixed at a height equal to the top of the baling machine facilitating items to be pushed into the baling box (18) by means of a suitable pushing element.

2. Safety apparatus as claimed in claim 1, characterised in that the table dimensions are such that a minium distance of at least 0.70 metres exists between an operator and the crushing mechanism of the metal baling machinery.

3. Safety apparatus as claimed in claim 1 or claim 2, characterised in that the metal baler (10) is equipped with an overhead gantry (42) with controls (40) situated in a suspended manner at the end of the gentry (42) the gantry being rotatable through a predetermined angle to allow control of the metal baler (10) from either side of the machinery.

4. Safety apparatus as claimed in any one of claims 1 to 3, characterised in that the rigid table (30) is permanently fixed to the metal baling machine (10) at a height equal to the height of the top of a baling box (18) forming part of the metal baling machine so that the rigid table combines with the top of the baling box to form a sorting table (31-37) for sorting scrap metal.

5. Safety apparatus as claimed in any one of claims 1 to 4, characterised in that the rigid table (30) is formed from steel plate.

6. Safety apparatus as claimed in claim 5, characterised in that the steel plate is between 3 mm to 12.5 mm thick to be resistant to damage by fork lift trucks.

7. Safety apparatus as claimed in claim 5, characterised in that the rigid table (30) comprises a series of seven adjacent steel plate areas (31 to 37) which respectively guard specific areas around the metal baling box (18).

8. Safety apparatus as claimed in claim 7, characterised in that a plurality of the areas of the steel plate (33,34,35) of the rigid table are situated at the front of the baling machine and provide a guard for a hydraulically operated door (22) of the baler (10) through which bales are ejected.

9. Safety apparatus as claimed in claim 8 in which the areas (33,34,35) of the table are supported by support legs (303).

## Patentansprüche

1. Sicherheitsvorrichtung in einer Metallemballiermaschine, welche Sicherheitsvorrichtung umfaßt: einen starren Tisch (30), welcher Tisch solche Abmessungen, daß er Zerkleinerungsmechanismen (20, 18) der Metallemballiermaschine vollständig umgibt, und eine solche Höhe aufweist, daß eine Bedienungsperson an einem Hineinfallen in die Maschine gehindert wird, dadurch gekennzeichnet, daß der starre Tisch (30) eine kombinierte eingriffsichere Sicherheitsbarriere sowie Sortier- und Tragfläche ist und der Tisch dauerhaft in einer Höhe gleich der Oberseite der Emballiermaschine befestigt ist und damit das Hineinschieben von Teilen in dem Emballierkasten (18) mittels eines geeigneten Schubelements ermöglicht.

2. Sicherheitsvorrichtung nach Anspruch 1, dadurch gekennzeichnet, daß die Tisch-Abmessungen derart, sind, daß zwischen einer Bedienungsperson und dem Zerkleinerungsmechanismus der Metallemballiermaschine ein Mindestabstand von wenigstens 0,70 m vorhanden ist.

3. Sicherheitsvorrichtung nach Anspruch 1 oder 2, dadurch gekennzeichnet, daß die Metallemballiermaschine (10) mit einem Überladekran (42) mit an dessen einem Ende aufgehängt angeordneten Bedienelementen (40) ausgestattet ist, welcher Überladekran (42) über einen vorbestimmten Winkel drehbar ist, um die Steuerung oder bedienung der Metall emballiermaschine (10) von jeder Seite der Maschine her zuzulassen.

4. Sicherheitsvorrichtung nach einem der Ansprüche 1 bis 3, dadurch gekennzeichnet, daß der starre Tisch (30) dauerhaft an der Metallemballiermaschine (10) in einer Höhe gleich der Höhe der Oberseite eines einen Teil der Metallemballiermaschine bildenden Emballierkastens (18) befestigt. ist, so daß der starre Tisch in Kombination mit der Oberseite des Emballierkastens einen Sortiertisch (31 - 37) zum Sortieren von Metallschrott bildet.

5. Sicherheitsvorrichtung nach einem der Ansprüche 1 bis 4, dadurch gekennzeichnet, daß der starre Tisch (30) aus Stahlplattenwerkstoff geformt ist.

6. Sicherheitsvorrichtung nach Anspruch 5, dadurch gekennzeichnet, daß der Stahlplattenwerkstoff zwischen 3 mm und 12,5 mm dick und damit gegen Beschädigung durch Gabelstaplerfahrzeuge widerstandsfähig ist.

7. Sicherheitsvorrichtung nach Anspruch 5, dadurch gekennzeichnet, daß der starre Tisch (30) eine Reihe von sieben aneinander angrenzenden Stahlplattenbereichen (31 - 37) umfaßt, die jeweils spezifische Bereiche um den Metallemballierkasten (18) herum schützen.

8. Sicherheitsvorrichtung nach Anspruch 7, dadurch gekennzeichnet, daß mehrere Bereiche des Stahlplattenwerkstoffs (33, 34, 35) des starren Tisches an der Vorderseite der Emballiermaschine angeordnet sind und einen Schutz für eine hydraulisch betätigte Tür (22) der Emballiermaschine (10), durch welche Ballen ausgestoßen werden, bereitstellen.

9. Sicherheitsvorrichtung nach Anspruch 8, wobei die Bereiche (33, 34, 35) des Tisches von Stützfüßen (303) getragen sind.

## Revendications

1. Dispositif de sécurité pour une machine à empaqueter des métaux, le dispositif de sécurité comprenant une table rigide (30), la table étant d'une dimension permettant d'entourer complètement les mécanismes de broyage (20,18) de la machine à empaqueter des métaux et étant d'une hauteur permettant d'empêcher un opérateur de tomber dans la machinerie et caractérisé en ce que la table rigide (30) est une combinaison d'une barrière contre les manipulations et- d'une surface de triage et de support, et la table est fixée à demeure à une hauteur égale à celle du sommet de la machine à empaqueter, facilitant la poussée des éléments dans le boîtier à empaqueter (18) au moyen d'un élément de poussée approprié.

2. Dispositif de sécurité selon la revendication 1, caractérisé en ce que les dimensions de la table sont telles qu'une distance minimale d'au moins 0,70 mètres existe entre l'opérateur et le mécanisme de broyage de la machinerie à empaqueter des métaux.

3. Dispositif de sécurité selon la revendication 1 ou la revendication 2, caractérisé en ce que le dispositif à empaqueter (10) est pourvu d'un échafaudage aérien (42) ayant des commandes (40) situées de manière suspendue à l'extrémité de l'échafaudage (42), l'échafaudage pouvant tourner d'un angle prédéterminé pour permettre la commande de l'appareil à empaqueter des métaux (10) depuis chaque côté de la machinerie.

4. Dispositif de sécurité selon l'une quelconque des revendications 1 à 3, caractérisé en ce que la table rigide (30) est fixée à demeure à la machine à empaqueter des métaux (10) à une hauteur égale à la hauteur du sommet d'un boîtier à empaqueter (10) faisant partie de la machine à empaqueter des métaux, de manière que la table rigide se combine au sommet du boîtier à empaqueter pour former une table de triage (31 à 37) servant à trier la ferraille.

5. Dispositif de sécurité selon l'une quelconque des revendications 1 à 4, caractérisé en ce que la table rigide (30) est formée d'une plaque en acier.

6. Dispositif de sécurité selon la revendication 5, caractérisé en ce que la plaque en acier a une épaisseur comprise entre 3 mm et 12,5 mm, pour être résistante à un endommagement provoqué par des chariots élévateurs à fourche.

7. Dispositif de sécurité selon la revendication 5, caractérisé en ce que la table rigide (30) comprend une série de 7 zones planes (31 à 37) adjacentes en acier qui protègent respectivement les zones spécifiques situées autour du boîtier à empaqueter des métaux (18).

8. Dispositif de sécurité selon la revendication 7, caractérisé en ce qu'une pluralité des zones de la plaque en acier (33, 34, 35) de la table rigide se situent à l'avant de la machine à empaqueter et fournissent une protection pour une porte (22), actionnée de manière hydraulique, de l'appareil à empaqueter (10), porte par laquelle sont éjectés les paquets.

9. Dispositif de sécurité selon la revendication 8, dans lequel les zones (33,34,35) de la table sont supportées par des pieds de support (303).
